# EUROPEAN PATENT APPLICATION

(11) **EP 3 547 672 A1**
(43) Date of publication of application: **02.10.2019**
(21) Application number: 17874884.4
(22) Date of filing: 22.11.2017
(51) Int. Cl.: H04N 7/14, H04N 13/204, G06F 3/01

(54) **DATA PROCESSING METHOD, DEVICE, AND APPARATUS**

(30) Priority: 28.11.2016 CN 201611063055
(71) Applicant: ZTE Corporation, Shenzhen, Guangdong 518057 (CN)
(72) Inventor: YE, Zaiwei, Shenzhen, Guangdong 518057 (CN); ZENG, Wei, Shenzhen, Guangdong 518057 (CN)
(74) Representative: Regimbeau
(86) International application number: PCT/CN2017/112217
(87) International publication number: WO 2018/095317

(57) **Abstract**

A data processing method comprises: in a processing of a first terminal and a second terminal performing video communication, obtaining first video data and second video data, wherein the first video data comprises a first left-eye view and a first right-eye view of a target object corresponding to the first terminal, and the second video data comprises a second left-eye view and a second right-eye view of a real-life scene acquired by the second terminal; combining the second left-eye view and a first image of the target object in the first left-eye view, and combining the second right-eye view and a second image of the target object in the first right-eye view; and generating, according to the combined second left-eye view and the combined second right-eye view, three-dimensional video data.

## Description

### TECHNICAL FIELD

The present invention relates to the field of augmented reality (AR) and, in particular, to a video data processing method and device, and apparatus.

### BACKGROUND

In recent years, with the rapid development of communication network technology, the mobile internet technology change quickly, and the conventional audio communication cannot meet the communication requirement of people. More and more people want to communicate with each other by means of video communication, so that video communication functions are provided on many terminals. Today, the video communication plays a very important role in people's life and work.

However, in the process of video call, merely a two-dimensional image shot by the camera of the opposite end can be displayed at the home end, so that a target object corresponding to the opposite end cannot be fused into the real scene where the home end is located and only the two-dimensional image of the opposite can be seen by the user. On the senses, the opposite in the video communication with the user is still at a distant place, which cannot make people feel that the opposite comes in the real environment where he is, so that the visual information of the video call at the home end lacks the real sense, the user cannot truly experience face-to-face communication between the opposite on the senses, and the user experience is poor.

### SUMMARY

In view of the above, embodiments of the present invention provide a video data processing method and device, and apparatus, implementing the augmented reality three-dimensional video call and improving the user experience.

In a first aspect, the embodiments of the present invention provide a video data processing method. The method includes: obtaining first video data and second video data in a process of video call between a first terminal and a second terminal, where the first video data at least includes a first left view and a first right view of a target object corresponding to the first terminal, and the second video data at least includes a second left view and a second right view of a real scene where the second terminal is located currently; fusing a first image of the target object in the first left view and the second left view and fusing a second image of the target object in the first right view and the second right view; and generating three-dimensional video data according to the fused second left view and the fused second right view.

In a second aspect, the embodiments of the present invention provide a video data processing device. The device includes an obtaining module, a fusion module and a generating module. The obtaining module is configured to obtain first video data and second video data in a process of video call between a first terminal and a second terminal, where the first video data at least includes a first left view and a first right view of a target object corresponding to the first terminal, and the second video data at least includes a second left view and a second right view of a real scene where the second terminal is currently located. The fusion module is configured to fuse a first image of the target object in the first left view and the second left view and fuse a second image of the target object in the first right view and the second right view. The generating module is configured to generate three-dimensional video data according to the fused second left view and the fused second right view.

In a third aspect, the embodiments of the present invention provide a server. The server includes a transceiver and a processor. The transceiver is configured to receive first video data from a first terminal and receive second video data from a second terminal, where the first video data at least includes a first left view and a first right view of a target object corresponding to the first terminal, and the second video data at least includes a second left view and a second right view of a real scene where the second terminal is currently located; and the transceiver is further configured to send three-dimensional video data to the second terminal. The processor is configured to fuse a first image of the target object in the first left view and the second left view and fuse a second image of the target object in the first right view and the second right view; and generate three-dimensional video data according to the fused second left view and the fused second right view.

In a fourth aspect, the embodiments of the present invention provide a terminal. The terminal includes a receiver, a stereo camera, a processor and a display. The receiver is configured to receive video data from an opposite end, where the video data of the opposite end at least includes a first left view and a first right view of a target object corresponding to the opposite end. The stereo camera is configured to synchronously acquire the second left view and the second right view of a current real scene. The processor is configured to fuse a first image of the target object in the first left view and the second left view and fuse a second image of the target object in the first right view and the second right view; and generate three-dimensional video data according to the fused second left view and the fused second right view. The display is configured to display the three-dimensional video data.

In a fifth aspect, the embodiments of the present invention further provide a computer-readable storage medium, which is configured to store computer-executable instructions for executing any method described above. According to the video data processing method and device and the apparatus provided by the embodiments of the present invention, the image data of the target object of the first terminal can be fused into the image data of the real scene where the second terminal is located currently, the real information in the video call process of the second terminal is enhanced, the augmented reality three-dimensional video call is provided for the user of the second terminal, and the user feels that the target object is in the current real environment on the senses, thereby improving the user experience.

### BRIEF DESCRIPTION OF DRAWINGS

FIG. 1 is a flowchart of a video data processing method according to an embodiment one of the present invention;
FIG. 2 is a flowchart of a video data processing method according to an embodiment two of the present invention;
FIG. 3 is a structural diagram of a video data processing device according to an embodiment three of the present invention;
FIG. 4 is a structural diagram of a server according to an embodiment four of the present invention; and
FIG. 5 is a structural diagram of a terminal according to an embodiment five of the present invention.

### DETAILED DESCRIPTION

The technical solutions of the embodiments of the present invention are clearly and completely described below in conjunction with the drawings in the embodiments of the present invention.

### Embodiment one

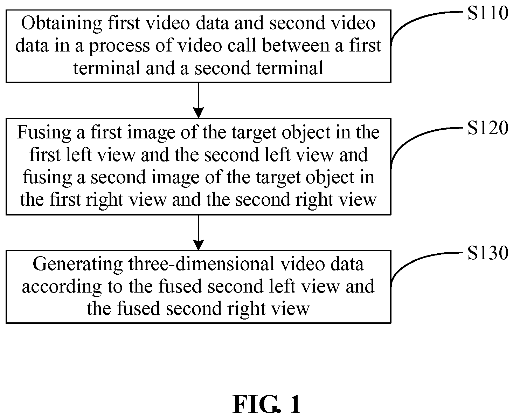

The embodiment provides a video data processing method. In the practical application, the method may be applied in scenarios requiring video data processing in multiple video communication services, which may be a video call application product, a social product, an intelligent office product and the like in a terminal, or may be the video data processing in a video service server. Exemplarily, a user may use an intelligent office product on a terminal to implement the augmented reality video call with another user, which gives him a feeling that the other user comes to a conference room where he is, so that his call experience is improved. FIG. 1 is a flowchart of a video data processing method according to an embodiment one of the present invention. Referring to FIG. 1, the method includes steps S110, S120 and S130.

In step S110, first video data and second video data are obtained in a process of video call between a first terminal and a second terminal.

The first video data at least includes a first left view and a first right view of a target object corresponding to the first terminal, and the second video data at least includes a second left view and a second right view of a real scene where the second terminal is currently located. When the user wants to make a target object appear in the real environment where the user is on the senses and obtain more realistic video call experience in the video call process, the user may choose the augmented reality video call service. In this way, in the process of video call between the first terminal and the second terminal, the first video data at least including the first left view and the first right view of the target object corresponding to the first terminal is obtained, and the second video data at least including the second left view and the second right view of the real scene where the second terminal is currently located is obtained. Therefore, image data of the target object corresponding to the first terminal may be fused into image data of the real scene where the second terminal is located currently, so that the video call experience of the user at the second terminal side is improved.

Optionally, the first video data may be a frame of data including the target object, such as the i-th frame of data, and in this case, the first video data includes a first left view and a first right view of the target object acquired at time i. The first video data may also be multiple frames of data including the target object, such as data from the j-th frame to the j+2-th frame, and in this case, the first video data includes all first left views and first right views of the target object acquired from the time j to the time j+2. Similarly, the second video data may be one frame of data including the real scene, or may be multiple frames of data including the real scene. The second video data is in synchronous correspondence with the first video data, and therefore, when the i-th frame data of the target object is included in the first video data, the i-th frame data of the real scene is also included in the second video data. The i-th frame data of the first video data or the second video data may be a three-dimensional image from which a left view and a right view of the target object or the real scene may be obtained, or the i-th frame data of the first video data or the second video data may be directly two two-dimensional images, that is, directly the left view and the right view of the target object or the real scene. Assuming that the first video data is 4-second video data with a frame rate of 25 frames per second, 25 times 4 first left views and first right views, that is, a total of 100 first left views and 100 first right views, are obtained. Therefore, the second video data also corresponds to 4-second video data with a frame rate of 25 frames per second. According to a time stamp, each first left view corresponds to one second left view, and each first right view corresponds to one second right view.

In the practical application, the first video data and the second video data may be acquired according to a binocular camera respectively. Two images with parallax, namely a left view and a right view, of the target object or the real scene may be acquired at the same time through both left and right cameras which are disposed on the same plane and have the same focal length and the same acquisition direction, and the three-dimensional data of the target object or the real scene may be obtained according to the two images with parallax. Of course, other types of stereo cameras, such as a quadruple camera, may also be used to acquire the video data of the target object or the real scene.

In a specific implementation process, when the first terminal acquires the left view and the right view of the target object, the scene where the target object is located may be a simple background, such as pure white, pure blue, pure green, etc., or may be a complex background, such as a road with a disordered environment. However, in order to reduce the complexity of the extraction algorithm and facilitate the extraction of an image of a real target object from the left and right views including the target object, the target object should be in a relatively simple background, such as a background with a single color. Optionally, a background having a large color difference from the target object may be used. For example, since blue and green are greatly different from the skin color of the person, and when the target object is a person, the blue background or the green background may be selected.

Optionally, the step S110 further includes: receiving the first video data from the first terminal and receiving the second video data from the second terminal; or receiving the first video data from the first terminal and synchronously acquiring the second left view and the second right view of the current real scene.

Optionally, when the method is applied to a server, the first video data and the second video data may be obtained by receiving the first video data from the first terminal and receiving the second video data from the second terminal; and when the method is applied to the second terminal, the first video data and the second video data may be obtained by receiving the first video data from the first terminal and synchronously acquiring the second left view and the second right view of the current real scene.

In step S120, a first image of the target object in the first left view is fused with the second left view and a second image of the target object in the first right view is fused with the second right view.

In order to enhance the reality of the video call of the second terminal user, after the first left view and the first right view of the target object corresponding to the first terminal and the second left view and the second right view of the current real scene of the second terminal is located are obtained, the first image of the target object in the first left view may be fused with the second left view to obtain a fused second left view simultaneously including the target object corresponding to the first terminal and the current real scene where the second terminal is located, and the second image of the target object in the first right view may be fused with the second right view to obtain a fused second right view simultaneously including the target object corresponding to the first terminal and the current real scene where the second terminal is located.

Exemplarily, assuming that the first image of the target object in the first left view is a standing person and the second left view is a tree, the fused left view may include the person standing beside the tree.

In the practical application, when the first image of the target object in the first left view is fused with the second left view and the second image of the target object in the first right view is fused with the second right view, at least one of common machine vision algorithms including a pixel-based image fusion algorithm, a multi-resolution image fusion algorithm based on wavelet transform, a pyramid image fusion algorithm, a poisson-based image synthesis algorithm and the like may be used, which may be determined by those skilled in the art according to actual conditions in the specific implementation.

Optionally, before the step S120, the method further includes: extracting the first image from the first left view and extracting the second image from the first right view according to a preset rule.

Before the first image of the target object is fused with the second left view and the second image of the target object is fused with the second right view, the first image is extracted from the first left view and the second image is extracted from the first right view according to the preset rule.

In the specific implementation process, a target recognition is performed on the first left view to extract the first image and the target recognition is performed on the first right view to extract the second image according to a pre-stored target object model; or background data in the first left view is filtered to obtain the first image and background data in the first right view is filtered to obtain the second image according to a pre-stored background model; and of course, other methods, such as a local poisson matting algorithm, a bayesian matting algorithm and the like, may also be used to obtain the first image and the second image, which may be determined by those skilled in the art in the specific implementation process.

In the practical application, the pre-stored target object model may be generated in advance by modeling a sample through a machine learning algorithm, or may be generated in real time through a machine vision algorithm with a target area manually selected by a user. Similarly, the pre-stored background model may be generated according to preset background color information, or may be generated in real time through the machine vision algorithm with a background area manually calibrated by the user. Of course, the pre-stored target object model or background model may be obtained in other ways.

Exemplarily, a sample target, such as a person or an automobile, may be learned through a machine learning algorithm, a relevant feature library of the target object is obtained, a visual model of the target object is established in advance, then the target object in the first video data is identified and matched, and the first image of the target object in the first left view and the second image of the target object in the first right view are obtained; or when the background color is different from color of a foreground target object, background information may be filtered out to obtain the image data of the target object; or when the background color is obviously different from the color of the foreground target object, transparent processing is performed on the background according to a background image layer filtering method to obtain the image data of the target object; or, a Gaussian background model may be established for the background, and then the background data is matched and recognized to obtain the image data of the target object.

In addition, since the obtained image often has various noises, these noises may be external noises caused by light or dust particles in the external environment, or may be internal noises caused by internal circuits of the video acquisition module or materials of the image sensing module. The presence of these noises may obscure the target object in the image or even make it impossible to distinguish, thereby causing inaccuracy of the obtained target data.

Therefore, in the specific implementation process, in order to ensure that the first image is accurately extracted from the first left view and the second image is accurately extracted from the first right view, denoising processing needs to be performed on the first left view and the first right view, so that the denoised first left view and first right view are used for extracting the first image and the second image.

In the practical application, when the denoising process is performed, the used denoising method may be a spatial domain denoising method such as a linear filtering method, a median filtering method, a wiener filtering method and the like, or may be a frequency domain denoising method such as a Fourier transform method, a wavelet transform method and the like, or, of course, may be other types of denoising methods such as a color histogram equalization method and the like.

In step S130, three-dimensional video data is generated according to the fused second left view and the fused second right view.

After the fused second left view and the fused second right view are obtained, three-dimensional video data including the target object and the real scene may be generated according to the three-dimensional imaging technology.

In the practical application, when the corresponding three-dimensional video data is generated according to the fused second left view and the fused second right view, the common three-dimensional imaging technology such as a color division method, a light division method, a time division method and the like may be used, which may be determined by those skilled in the art according to practical situations during specific implementation.

In the specific implementation process, in order to make the user of the second terminal feel augmented reality three-dimensional video data, after the step S130, the method further includes: displaying the three-dimensional video data or transmitting the three-dimensional video data to the second terminal.

Optionally, when the method is applied to the second terminal, the three-dimensional video data may be directly displayed on the second terminal; and when the method is applied to a server, the server needs to send the three-dimensional video data to the second terminal, and the second terminal displays the three-dimensional video data after obtaining the three-dimensional video data.

In the practical application, when the user watches the three-dimensional video data, passive polarizing glasses may be used, or active shutter three dimensions (3D) glasses may also be used. Of course, other methods such as virtual reality (VR) glasses may also be used. Generally, since the method of generating the three-dimensional video data is different, correspondingly, the method for watching the three-dimensional video data is different. For example, when the time-division based 3D technology is used to generate the three-dimensional video data, then the user may watch the three-dimensional video data using active shutter 3D glasses.

At this point, the processing on the second video data is completed.

According to the above content, in the technical solutions provided by the embodiment, first, first video data and second video data are obtained in a process of video call between a first terminal and a second terminal, where the first video data at least includes a first left view and a first right view of a target object corresponding to the first terminal, and the second video data at least includes a second left view and a second right view of a real scene where the second terminal is currently located. Second, a first image of the target object in the first left view is fused with the second left view and a second image of the target object in the first right view is fused with the second right view. Finally, three-dimensional video data where the target object corresponding to the first terminal and the real scene where the second terminal user is currently located are fused according to the fused second left view and the fused second right view. Therefore, in the video data processing method provided by the present invention, in the process of video call, the target object corresponding to the first terminal may be fused into the real scene where the second terminal is located, to enhance the real information of the video call of the second terminal and provide the augmented reality three-dimensional video call for the user of the second terminal, so that the user corresponding to the second terminal may feel that the target object is in the real environment where the user is located on the senses, and the good user experience may be provided for the user.

### Embodiment two

On the basis of the above embodiment, the embodiment provides a video communication system. The system includes a terminal 1 and a terminal 2. The embodiment provides a data processing method, which may be applied to the video communication system.

Exemplarily, using a video conference as a practical application scenario, assuming that a user B and a user A need to communicate with each other but it is inconvenient for the two users to communicate face to face because them are not in the same city, the user B may make an augmented reality video call with the user A through the video communication system in a conference room, and thus, by fusing the seated user A into a chair opposite to the user B in the conference room where the user B is, the user B feels on the senses that the user A is in a real environment where he is currently.

The process of enhancing the video call experience of the user B of the terminal 2 is described in detail below.

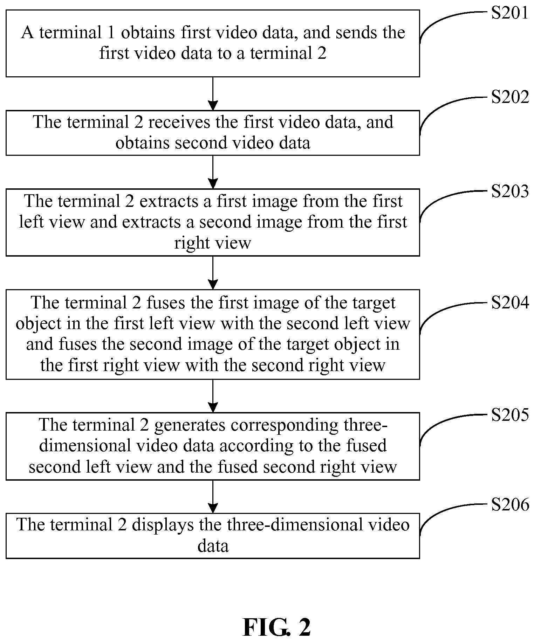

FIG. 2 is a flowchart of a video data processing method according to an embodiment two of the present invention. Referring to FIG. 2, the video data processing method includes steps S201 to S206.

In step S201, the terminal 1 obtains first video data, and trasnmits the first video data to the terminal 2.

The first video data at least includes a first left view and a first right view of the user A.

In the specific implementation process, the terminal 1 may shoot the user A through a binocular 3D camera to obtain the first left view and the first right view of the user A.

In the practical application, in order to facilitate subsequent extraction of image data of the user A, the user A may be in a single-color background, such as white, green or blue. Generally, when the target to be acquired is a person, since green and blue are greatly different from the skin color of the person, the blue background or the green background may be selected to act like a blue screen or a green screen in movie shooting.

In step S202, the terminal 2 receives the first video data, and obtains second video data.

The second video data is a second left view and a second right view of the conference room acquired from the view angle of the user B.

In the practical application, the terminal 2 may be a wearable helmet provided with a binocular 3D camera on its outer side. The user B may wear the second terminal on the head, so that the second left view and the second right view of the conference room seen from the view angle of the user B may be obtained.

In step S203, the terminal 2 extracts a first image from the first left view and extracts a second image from the first right view.

In step S204, the terminal 2 fuses the first image of the target object in the first left view and the second left view and fuses the second image of the target object in the first right view and the second right view.

After the first image and the second image of the user A are obtained, three-dimensional information of the user A may be fused into the seat opposite to the user B in the conference room.

In step S205, the terminal 2 generates corresponding three-dimensional video data according to the fused second left view and the fused second right view.

After the fused second left view and the fused second right view are obtained, the terminal 2 may generate the corresponding three-dimensional video data through the three-dimensional imaging technology so as to display the three-dimensional video data to the user B for viewing. In step S206, the terminal 2 displays the three-dimensional video data.

After the three-dimensional video data is generated, the terminal 2 may display the three-dimensional video data to the user B for viewing. Exemplarily, the user B may view through the terminal 2 that the user A is in the same conference room as he is and sits in the opposite seat.

At this point, the processing on the second video data obtained by the terminal 2 is completed.

According to the above content, through the method provided by the embodiment, the user B may fuse the image of the user A needing to communicate with the user B into the image of the real scene where the user B is located through the terminal 2 and display the image through the three-dimensional imaging technology, so that the effect of reality enhancement is implemented, the user B may feel that the user A is in the real environment where the user A is on the senses, and the video communication experience of the user B is improved.

### Embodiment three

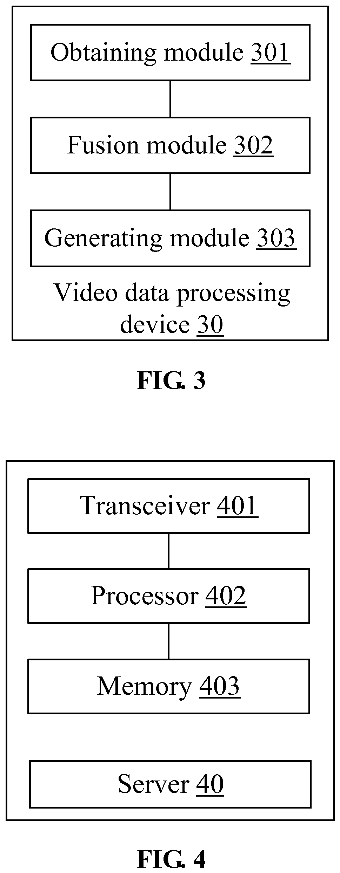

The embodiment provides a video data processing device. FIG. 3 is a structural diagram of a video data processing device according to an embodiment three of the present invention. Referring to FIG. 3, the video data processing device 30 includes: an obtaining module 301, a fusion module 302 and a generating module 303. The obtaining module 301 is configured to obtain first video data and second video data in a process of video call between a first terminal and a second terminal, where the first video data at least includes a first left view and a first right view of a target object corresponding to the first terminal, and the second video data at least includes a second left view and a second right view of a real scene where the second terminal is currently located. The fusion module 302 is configured to fuse a first image of the target object in the first left view and the second left view and fuse a second image of the target object in the first right view and the second right view. The generating module 303 is configured to generate three-dimensional video data according to the fused second left view and the fused second right view.

Optionally, the video data processing device further includes an extracting module, which is configured to extract the first image from the first left view and extract the second image from the first right view according to a preset rule.

Optionally, the extracting module is further configured to perform a target recognition on the first left view to extract the first image and perform the target recognition on the first right view to extract the second image according to a pre-stored target object model.

Optionally, the extracting module is further configured to filter background data in the first left view to obtain the first image and filter background data in the first right view to obtain the second image according to a pre-stored background model.

Optionally, the obtaining module is further configured to receive the first video data from the first terminal and receive the second video data from the second terminal. The video data processing device further includes a transmitting module, which is configured to send the three-dimensional video data to the second terminal.

Optionally, the obtaining module is further configured to receive the first video data from the first terminal and synchronously acquire the second left view and the second right view of the current real scene. Correspondingly, the video data processing device further includes a displaying module, which is configured to display the three-dimensional video data.

In the practical application, the obtaining module, the fusion module, the generating module, the extracting module and the transmitting module may all be implemented by a central processing unit (CPU), a graphics processing unit (GPU), a micro processor unit (MPU), a digital signal processor (DSP) or a field programmable gate array (FPGA).

Description of the above device embodiments is similar to description of the above method embodiments, and the device embodiments have similar beneficial effects as the method embodiments, which will be repeated herein. For the technical details not disclosed in the device embodiments, please refer to the description of the method embodiments for understanding, and for the sake of brevity, what has been described will not be repeated herein.

### Embodiment four

The embodiment provides a server. FIG. 4 is a structural diagram of a server according to an embodiment four of the present invention. Referring to FIG. 4, the server 40 includes a transceiver 401 and a processor 402. The transceiver 401 is configured to receive first video data from a first terminal and receive second video data from a second terminal, where the first video data at least includes a first left view and a first right view of a target object corresponding to the first terminal, and the second video data at least includes a second left view and a second right view of a real scene where the second terminal is currently located. The transceiver 401 is further configured to send three-dimensional video data to the second terminal. The processor 402 is configured to fuse a first image of the target object in the first left view and the second left view and fuse a second image of the target object in the first right view and the second right view; and generate three-dimensional video data according to the fused second left view and the fused second right view.

Optionally, the processor 402 is further configured to extract the first image from the first left view and extract the second image from the first right view according to a preset rule. Optionally, the processor 402 is further configured to perform a target recognition on the first left view to extract the first image and perform the target recognition on the first right view to extract the second image according to a pre-stored target object model.

Optionally, the processor 402 is further configured to filter background data in the first left view to obtain the first image and filter background data in the first right view to obtain the second image according to a pre-stored background model.

The embodiment further provides a computer-readable storage medium, which may be the server configured in the above embodiment and which is configured to a store computer-executable instructions for executing any video data processing method described in the above embodiments.

Optionally, the server in the embodiment further includes a memory 403, which is configured to store the data and logic instructions, such as the background model and the target object model described above. The processor 402 may call the logic instructions in the memory 403 to execute the video data processing method described in the above embodiments.

The above logic instructions in the memory may be implemented in the form of a software function unit and, when sold or used as an independent product, may be stored in a computer-readable storage medium. The storage medium may be a non-transient storage medium, such as a USB flash disk, a mobile hard disk, a read-only memory (ROM), a random access memory (RAM), a magnetic disk, an optical disk or any other media that can store program codes, or may be a transient storage medium.

Description of the above server embodiments is similar to description of the above method embodiments, and the server embodiments have similar beneficial effects as the method embodiments, which will be repeated herein. For the technical details not disclosed in the server embodiments, please refer to the description of the method embodiments for understanding, and for the sake of brevity, what has been described will not be repeated herein.

### Embodiment five

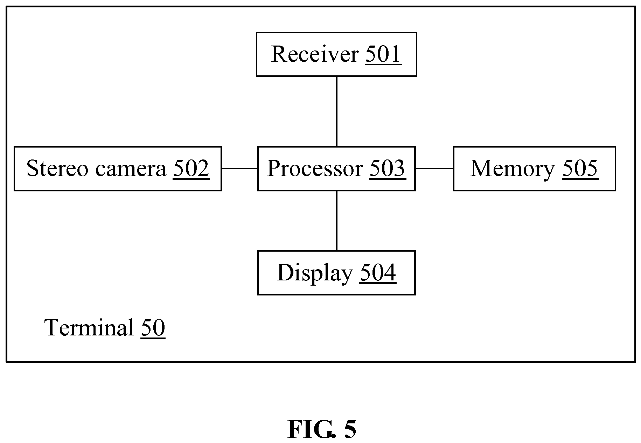

The embodiment provides a terminal. FIG. 5 is a structural diagram of a terminal according to an embodiment five of the present invention. Referring to FIG. 5, the terminal 50 includes a receiver 501, a stereo camera 502, a processor 503 and a display 504. The receiver 501 is configured to receive video data from an opposite end, where the video data of the opposite end at least includes a first left view and a first right view of a target object corresponding to the opposite end. The stereo camera 502 is configured to synchronously acquire the second left view and the second right view of a current real scene. The processor 503 is configured to fuse a first image of the target object in the first left view and the second left view and fuse a second image of the target object in the first right view and the second right view; and generate corresponding three-dimensional video data according to the fused second left view and the fused second right view. The display 504 is configured to display the three-dimensional video data.

Optionally, the processor 503 is further configured to extract the first image from the first left view and extract the second image from the first right view according to a preset rule. Optionally, the processor 503 is further configured to perform a target recognition on the first left view to extract the first image and perform the target recognition on the first right view to extract the second image according to a pre-stored target object model.

Optionally, the processor 503 is further configured to filter background data in the first left view to obtain the first image and filter background data in the first right view to obtain the second image according to a pre-stored background model.

The embodiment further provides a computer-readable storage medium, which may be the terminal configured in the above embodiment and which is configured to a store computer-executable instructions for executing any video data processing method described in the above embodiments.

Optionally, the terminal further includes a memory 505, which is configured to store the data and logic instructions, such as the background model and the target object model described above. The processor 503 may call the logic instructions in the memory 505 to execute the video data processing method described in the above embodiments.

The above logic instructions in the memory may be implemented in the form of a software function unit and, when sold or used as an independent product, may be stored in a computer-readable storage medium. The storage medium may be a non-transient storage medium, such as a USB flash disk, a mobile hard disk, a read-only memory (ROM), a random access memory (RAM), a magnetic disk, an optical disk or any other media that can store program codes, or may be a transient storage medium.

Description of the above terminal embodiments is similar to description of the above method embodiments, and the terminal embodiments have similar beneficial effects as the method embodiments, which will be repeated herein. For the technical details not disclosed in the terminal embodiments, please refer to the description of the method embodiments for understanding, and for the sake of brevity, what has been described will not be repeated herein. It is to be understood by those skilled in the art that the embodiments of the present invention may be provided as methods, systems or computer program products. Therefore, the embodiments of the present invention may take the form of a hardware embodiment, a software embodiment or an embodiment with a combination of software and hardware. The embodiments of the present invention may take the form of a computer program product implemented in one or more computer-usable storage media (including, but not limited to, a disk memory and an optical memory) that includes computer-usable program codes.

The present invention is described with reference to flowcharts and/or block diagrams of methods, devices (systems) and computer program products according to the embodiments of the present invention. It should be understood that computer program instructions may implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing device to produce a machine so that instructions executed by a computer or the processor of another programmable data processing device produce a means for implementing functions specified in one or more flows in the flowcharts and/or one or more blocks in the block diagrams.

These computer program instructions may also be stored in a computer-readable memory which may direct the computer or another programmable data processing device to operate in a particular manner so that the instructions stored in the computer-readable memory produce a manufactured product including an instructing means. The instructing means implements the functions specified in one or more flows in the flowcharts and/or one or more blocks in the block diagrams.

These computer program instructions may also be loaded onto the computer or another programmable data processing device so that a series of operation steps are performed on the computer or another programmable device to produce processing implemented by the computer. Therefore, instructions executed on the computer or another programmable device provide steps for implementing the functions specified in one or more flows in the flowcharts and/or one or more blocks in the block diagrams.

### INDUSTRIAL APPLICABILITY

According to the video data processing method and device and the apparatus provided by the present invention, the image data of the target object of the first terminal can be fused into the image data of the real scene where the second terminal is located currently, the real information in the video call process of the second terminal is enhanced, the augmented reality three-dimensional video call is provided for the user of the second terminal, and the user feels that the target object is in the current real environment on the senses, thereby improving the user experience.

## Claims

1. A video data processing method, comprising:
obtaining first video data and second video data in a process of video call between a first terminal and a second terminal, wherein the first video data at least comprises a first left view and a first right view of a target object corresponding to the first terminal, and the second video data at least comprises a second left view and a second right view of a real scene where the second terminal is currently located;
fusing a first image of the target object in the first left view and the second left view and fusing a second image of the target object in the first right view and the second right view; and
generating three-dimensional video data according to the fused second left view and the fused second right view.

2. The method of claim 1, before the fusing the first image of the target object in the first left view and the second left view and fusing the second image of the target object in the first right view and the second right view, the method further comprises:
extracting the first image from the first left view and extracting the second image from the first right view according to a preset rule.

3. The method of claim 2, wherein the extracting the first image from the first left view and extracting the second image from the first right view according to the preset rule comprises:
performing a target recognition on the first left view to extract the first image and performing the target recognition on the first right view to extract the second image according to a pre-stored target object model.

4. The method of claim 2, wherein extracting the first image from the first left view and extracting the second image from the first right view according to the preset rule comprises:
filtering background data in the first left view to obtain the first image and filtering background data in the first right view to obtain the second image according to a pre-stored background model.

5. The method of any one of claims 1 to 4, wherein the obtaining the first video data and the second video data in the process of video call between the first terminal and the second terminal comprises:
receiving the first video data from the first terminal and receiving the second video data from the second terminal; and
after the generating the three-dimensional video data, the method further comprises:
transmitting the three-dimensional video data to the second terminal.

6. The method of any one of claims 1 to 4, wherein the obtaining the first video data and the second video data in the process of video call between the first terminal and the second terminal comprises:
receiving the first video data from the first terminal and synchronously acquiring the second video data of the real scene where the second terminal is currently located; and
after generating the three-dimensional video data, the method further comprises:
displaying the three-dimensional video data.

7. A video data processing device, comprising an obtaining module, a fusion module and a generating module;
wherein the obtaining module is configured to obtain first video data and second video data in a process of video call between a first terminal and a second terminal, wherein the first video data at least comprises a first left view and a first right view of a target object corresponding to the first terminal, and the second video data at least comprises a second left view and a second right view of a real scene where the second terminal is currently located;
wherein the fusing module is configured to fuse a first image of the target object in the first left view and the second left view and fuse a second image of the target object in the first right view and the second right view; and
wherein the generating module is configured to generate three-dimensional video data according to the fused second left view and the fused second right view.

8. The device of claim 7, further comprising an extracting module, wherein the extracting module is configured to extract the first image from the first left view and extract the second image from the first right view according to a preset rule.

9. The device of claim 8, wherein the extracting module is configured to perform a target recognition on the first left view to extract the first image and perform the target recognition on the first right view to extract the second image according to a pre-stored target object model.

10. The device of claim 8, wherein the extracting module is configured to filter background data in the first left view to obtain the first image and filter background data in the first right view to obtain the second image according to a pre-stored background model.

11. A server, comprising a transceiver and a processor, wherein
the transceiver is configured to receive first video data from a first terminal and receive second video data from a second terminal, wherein the first video data at least comprises a first left view and a first right view of a target object corresponding to the first terminal, and the second video data at least comprises a second left view and a second right view of a real scene where the second terminal is currently located; and the transceiver is further configured to send three-dimensional video data to the second terminal; and
the processor is configured to fuse a first image of the target object in the first left view and the second left view and fuse a second image of the target object in the first right view and the second right view; and generate three-dimensional video data according to the fused second left view and the fused second right view.

12. A terminal, comprising a receiver, a stereo camera, a processor and a display, wherein
the receiver is configured to receive video data from an opposite end, wherein the video data of the opposite end at least comprises a first left view and a first right view of a target object corresponding to the opposite end;
the stereo camera is configured to synchronously acquire a second left view and a second right view of a current real scene;
the processor is configured to fuse a first image of the target object in the first left view and the second left view and fuse a second image of the target object in the first right view and the second right view; and generate three-dimensional video data according to the fused second left view and the fused second right view; and
the display is configured to display the three-dimensional video data.

13. A computer-readable storage medium, which is configured to store computer-executable instructions for executing the method of any one of claims 1 to 6.
